(19) Europäisches Patentamt
European Patent Office
Office européen des brevets

(11) Veröffentlichungsnummer: **0 476 301 A1**

(12) **EUROPÄISCHE PATENTANMELDUNG**

(21) Anmeldenummer: **91113564.8**

(22) Anmeldetag: **13.08.91**

(51) Int. Cl.5: **B65B 5/10**, B65B 5/06

(30) Priorität: **15.09.90 DE 4029359**

(43) Veröffentlichungstag der Anmeldung:
**25.03.92 Patentblatt 92/13**

(84) Benannte Vertragsstaaten:
**CH DE FR GB IT LI**

(71) Anmelder: **Natec Reich, Summer GmbH & Co. KG**
**Mannsnetterstrasse 1**
**W-8996 Opfenbach(DE)**

(72) Erfinder: **Vogogna, Enrico**
**Frühlingstrasse 42**
**W-8998 Lindenberg(DE)**
Erfinder: **Honsberg, Günter**
**Am Waltersbühl 16**
**W-7988 Wangen(DE)**

(74) Vertreter: **Riebling, Peter, Dr.-Ing.,**
**Patentanwalt**
**Rennerle 10, Postfach 31 60**
**W-8990 Lindau/B.(DE)**

(54) **Einlegevorrichtung für stapelförmiges Packungsgut, beispielsweise Käsescheiben, Wurstscheiben, Kekse und dergleichen Waren.**

(57) Beschrieben wird eine Einlegevorrichtung für das Einlegen von stapelförmigen Packungsgut (12) in Tiefziehbehälter (8) oder Becher mit einem Einlegekopf (1), an dessen Unterseite Greifer (3,4,5,6) vorgesehen sind, die an ihren unteren Enden Haken (16,17) aufweisen, die das Packungsgut (12) umgreifen.

Durch diese Merkmale wird insbesondere ein geringer Abstand zu dem Außenumfang des Packungsgutes und dem Innenumfang des Behälters erzielt.

EP 0 476 301 A1

Die Erfindung betrifft eine Vorrichtung zum Einlegen von stapelförmigem Packunggut, insbesondere von Käsescheiben, Wurstscheiben, Keksen und dergleichen Waren, insbesondere von Lebensmitteln, in Tiefziehbehälter oder Becher.

Bisher bestand das Problem, daß man derartig vorkommende, stapelförmige Lebensmittelgüter in Tiefziehbehältern oder in relativ tiefen Bechern verpackt hatte.

Das Problem dabei ist, daß zwischen dem Packungsgut und dem Behälter nur ein ganz kleiner Zwischenraum ist, der in der Regel gerade ausreicht, das Packungsgut in diesem Behälter unter Spiel hineinzubefördern.

Bisher war es nicht möglich, ein derartiges Einbringen von stapelförmig vorhandenem Packungsgut in einen relativ tiefen Tiefziehbehälter unter Aufrechterhaltung eines geringen Abstandes zwischen der Seitenwand des Behälters und der Seitenwand des Packungsgutes zu bewerkstelligen.

Der vorliegenden Erfindung liegt deshalb die Aufgabe zugrunde, eine Einlegevorrichtung der eingangs genannten Art so auszubilden, daß man ohne manuelle Hilfe stapelförmiges Packungsgut im Tiefziehbecher oder Behälter einbringt, wobei ein geringer Abstand zwischen dem Außenumfang des Packungsgutes und dem Innenumfang des Behälters vorhanden sein soll.

Zur Lösung der gestellten Aufgabe ist die Erfindung dadurch gekennzeichnet, daß an der Unterseite eines Einlegekopfes schmale stangen- oder plattenförmige Greifer vorhanden sind, welche Greifer an ihren unteren, freien Enden Hakenenden aufweisen, welche Hakenenden durch einen Bewegungsantrieb der Greifer im Einlegekopf unter das Packungsgut drehbar oder schwenkbar sind, und welche Hakenenden das Packungsgut untergreifen, wobei der gesamte Einlegekopf heb- und drehbar ausgebildet ist.

Mit der gegebenen technischen Lehre nach der vorliegenden Erfindung wird erreicht, daß durch die beschriebenen, relativ schmalen Greifer es nun möglich ist, zunächst das Packungsgut von einem Zuführband zu ergreifen und im Einlegekopf aufzunehmen.

Die Greifer ragen hierbei nur geringfügig über den Außenumfang des Packungsgutes hinaus. Hierbei sind die Greiferspitzen als Hakenenden ausgebildet und untergreifen das Packungsgut, welches somit zusammen mit dem gesamten Einlegekopf angehoben werden kann.

In dieser Stellung wird der Einlegekopf selbst angehoben und gegebenenfalls geschwenkt, so daß er in fluchtender Gegenüberstellung über einer Aufnahmeöffnung einer Tiefziehpackung zu stehen kommt.

Der Einlegekopf mit den darunter angeordneten Greifern und dem von den Greifern gefassten Packungsgut wird nun mit geringem Spiel in die Tiefziehpackung abgesenkt. Hierbei ist wichtig, daß die relativ schmalen Greifer genau den Zwischenraum zwischen dem Außenumfang des Packungsgutes und dem Innenumfang der Tiefziehpackung ausfüllen.

Die Hakenenden der Greifer werden zusammen mit den Greifern nun so gedreht, daß sie außer Eingriff mit dem Packungsgut kommen und in dieser Stellung wird der Einlegekopf mit den daran befestigten Greifern aus der Tiefziehpackung herausgezogen.

Damit ist bewerkstelligt, daß das Packungsgut schonend, stapelförmig in die Tiefziehpackung eingelegt wird, und zwar unter Beibehaltung eines geringstmöglichen Spaltes zwischen dem Außenumfang des Packungsgutes und dem Innenumfang des Tiefziehbechers.

Für den Bewegungsantrieb der Greifer gibt es unterschiedliche Möglichkeiten, die sämtliche vom Schutzumfang der vorliegenden Erfindung umfaßt sein sollen.

In einer ersten bevorzugten Ausführungsform bestehen die Greifer aus stangenförmigen Teilen, die an ihren unteren freien Enden hakenartig abgebogene Enden aufweisen. Diese Enden sind entweder um 90° abgebogen und weisen dann in horizontaler Ebene oder in einer anderen Ausführungsform wird das in horizontaler Ebene abgebogene Hakenende noch zusätzlich in dieser Ebene gekrümmt.

Wichtig ist, daß die Hakenenden so ausgebildet sind, daß das jeweilige Packungsgut leicht untergriffen werden kann und daß die Hakenenden auch so gedreht werden können, daß sie ohne weiteres in dem schmalen Zwischenraum zwischen dem Außenumfang des Packungsgutes und dem Innenumfang des Tiefziehbechers gedreht und herausgezogen werden können.

Hierbei wird es bevorzugt, wenn die Greifer selbst drehangetrieben sind.

In einer anderen Ausführungsform ist es vorgesehen, daß statt des Drehantriebs der Greifer die Greifer in einer horizontalen Ebene verschiebbar ausgebildet sind.

In einer dritten Ausführungsform ist es vorgesehen, daß die Greifer schwenkbar am Einlegekopf gehalten sind.

In einer vierten Ausführungsform ist es vorgesehen, daß die Greifer selbst als vertikal ausgerichtete Hohlrohre ausgebildet sind und im dem jeweiligen Hohlrohr ein Innenteil verschiebbar angeordnet ist, welches Innenteil (nach dem Herausschieben am unteren Ende aus dem Hohlrohr) ein hakenförmiges Ende ausbildet.

In einer weiteren Ausführungsform der vorliegenden Erfindung ist es vorgesehen, die hakenförmigen

EP 0 476 301 A1

Enden der stangenförmigen Greifer schwenkbar an einem Schwenklager am unteren freien Ende des stangenförmigen Greifers auszubilden.

In einer weiteren Ausführungsform ist es vorgesehen, statt der stangenförmigen Greifer plattenförmige Greifer zu verwenden, die ebenfalls in einer horizontalen Ebene verschiebbar ausgebildet sind.

Wichtig bei allen Ausführungsformen ist, daß mit den beschriebenen Greifern ein Einlegekopf ausgebildet wird und daß an der Unterseite dieses Einlegekopfes Greifer angeordnet sind. Es werden hierbei vier Greifer bevorzugt, es können aber auch mehr oder weniger Greifer verwendet werden.

Ebenso ist die Formgebung der Greifer dem jeweiligen zu verpackenden Packungsgut angepaßt.

Bei rundem Verpackungsgut sind die hakenförmigen Enden möglichst dem Außenumfang des Packungsgutes selbst angepaßt.

Die Einlegeköpfe können in einer Vielfachanordnung in einer Einlegevorrichtung vorhanden sein, wobei sie reihen- oder spaltenweise oder in Form einer Matrix angeordnet sind.

Eine derartig matrixförmige Anordnung kann in einer Halteplatte gelagert sein, welche Halteplatte wiederum mit einem Bewegungsantrieb verbunden ist, der die gesamte Halteplatte mit den darunter angeordneten zeilen- und spaltenweise befestigten Einlegeköpfen dreh- und senk- sowie hebbar ausbildet.

Verschiedene Ausführungsformen der Erfindung werden nun anhand der Zeichnungen beschrieben. Hierbei ergeben sich aus der Zeichnung und ihrer Beschreibung weitere Merkmale und Vorteile der Erfindung.

Es zeigen:

| | |
|---|---|
| Figur 1 und 2: | schematisiert in Seitenansicht die Funktion eines Einlegekopfes nach der Erfindung, wobei Figur 1 die abgesenkte Stellung und Figur 2 die angehobene Stellung des Einlegekopfes zeigt; |
| Figur 3: | zwei verschiedene Ausführungsformen eines Greifers; |
| Figur 4 und 5: | die Bewegungstriebe der Greifer bei rechteckigem oder rundem Packungsgut vor dem Ergreifen des Warenstapels; |
| Figur 6 und 7: | den Bewegungsantrieb der Greifer in einer zweiten Ausführungsform wiederum bei rechteckigem oder rundem Packungsgut; |
| Figur 8: | schematisiert einen Einlegekopf mit Greifern nach Figur 4; |
| | die verschiedenen Aneinanderreihungsmöglichkeiten von |
| Figur 9 und 10: | Einlegeköpfen nach der Erfindung; |
| Figur 11 und 12: | Einlegeköpfe mit plattenförmigen Greifern und dazugehörenden Bewegungsantrieben; |
| Figur 13: | einen Greifer mit schwenkbar angeordneten Hakenenden; |
| Figur 14: | einen Einlegekopf mit in horizontaler Ebene verschiebbaren Greifern; |
| Figur 15: | einen Einlegekopf mit schwenkbar ausgebildeten Greifern; |
| Figur 16: | Greifer mit darin verschiebbarem Innenteil; |
| Figur 17: | die Draufsicht auf eine Verpackungsmaschine mit Zuführband; |
| Figur 18: | die Seitenansicht eines Einlegekopfes in einer detailliert ausgeführten Konstruktion; |
| Figur 19: | die um 90° gedrehte Seitenansicht des Einlegekopfes nach Figur 18; |
| Figur 20: | Schnitt gemäß der Linie XX-XX in Figur 19; |
| Figur 21: | Schnitt gemäß der Linie XXI-XXI in Figur 19; |
| Figur 22: | Schnitt gemäß der Linie XXII-XXII in Figur 19; |
| Figur 23: | die Hauptansicht einer Einlegevorrichtung unter Verwendung von Einlegeköpfen nach den Figuren 18 bis 22; |
| Figur 24: | die um 90° gedrehte Seitenansicht der Einlegevorrichtung nach Figur 23. |

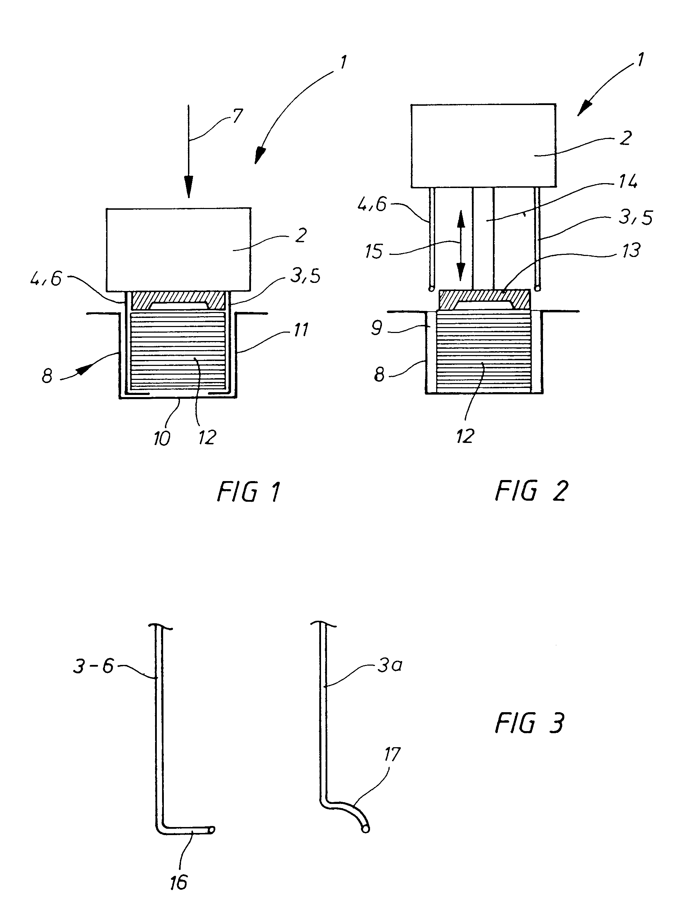

In den Figuren 1 und 2 besteht der Einlegekopf 1 im wesentlichen aus einem oberen Antriebsteil 2 und aus unteren, an der Unterseite des Antriebsteils 2 angeordneten Greifern 3 - 6.

Die Greifer 3 - 6 sind genau identisch ausgebildet, deshalb reicht es zur Erläuterung der Erfindung aus, jeweils nur einen Greifer zu beschreiben.

An der Unterseite des Antriebsteils 2 ist ferner eine Führungsstange 14 mit einem daran befestigten Stempel 13 angeordnet.

In der in Figur 1 dargestellten Stellung haben die Greifer 3 - 6 mit ihren hakenförmigen Enden bereits ein Packungsgut 12 an der Unterseite ergriffen und der gesamte Einlegekopf 1 ist bereits schon in die Aufnahmeöffnung einer Tiefziehpackung 8 in Pfeilrichtung 7 hineingefahren.

Man erkennt, daß die Greifer 3 - 6 in dem schmalen Zwischenraum 9 zwischen dem Außenumfang des Packungsgutes 12 und dem Innenumfang des Tiefziehpackung 1 sich befinden.

In der in Figur 1 dargestellten Lage wird also das Packungsgut 12 in die Tiefziehpackung 8 eingelegt.

Die Greifer werden über später noch zu beschreibende Antriebsmechanismen gedreht, so daß die

3

hakenförmigen Enden der Greifer 3 - 6 nicht mehr den Boden des Packungsgutes 12 untergreifen und somit die Greifer 3 außer Eingriff mit dem Packungsgut 12 gelangen. In dieser Stellung wird der Einlegekopf 1 in Gegenrichtung zur Pfeilrichtung 7 nach oben aus der Tiefziehpackung 8 herausgefahren, wobei das Packungsgut 12 durch den an der Führungsstange 14 befestigten Stempel 13 niedergehalten wird.

Es kommt also hiermit zu einer schonenden Ablage des Packungsgutes 12 auf dem Boden 10 der Tiefziehpackung 8, wobei die Seitenwände 11 der Tiefziehpackung 8 mit den Greifern im wesentlichen nicht in Berührung kommen.

In der in Figur 2 gezeigten Lage wird also der gesamte Einlegekopf 1 in Pfeilrichtung 15 nach oben weggefahren.

In der Figur 3 (linke Abbildung) ist ein derartiger Greifer 3-6 näher dargestellt. Hierbei ist erkennbar, daß das untere Hakenende 16 im wesentlichen in horizontaler Ebene abgebogen ist.

Es versteht sich von selbst, daß das Hakenende 16 auch noch andere Abbiegungen haben kann, wie z.B. bei dem auf der rechten Abbildung gezeigten Greifer 3a, bei dem das Hakenende 17 noch zusätzlich in horizontaler Ebene eine Krümmung aufweist.

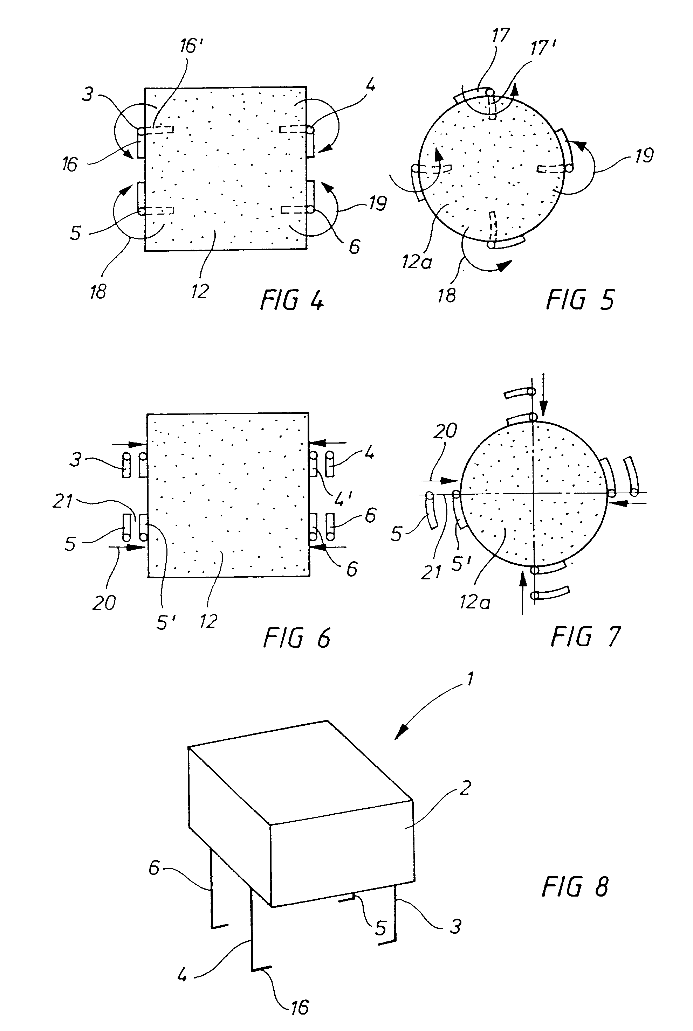

Gemäß Figur 4 werden somit die Hakenenden (16 oder 17) zunächst seitlich an die Packung als Packungsgut 12 angelegt, wobei sie parallel zum Außenumfang des Packungsgutes gerichtet sind.

Über den später noch zu beschreibenden Bewegungsantrieb werden dann die Hakenenden 16 in den Pfeilrichtungen 18,19 gedreht, so daß sie in ihre Stellung 16' unter dem Packungsgut 12 gelangen und dieses somit tragen.

In analoger Weise ist ein Ergreifen eines runden Packungsgutes 12a in Figur 5 gezeigt. Dort sind die Hakenenden 17 dem Außenumfang des runden Packungsgutes 12a angepaßt und es erfolgt ein gleicher Drehantrieb in den Pfeilrichtungen 18,19.

Die Figuren 6 und 7 zeigen in analoger Weise eine weitere Möglichkeit eines Bewegungsantriebs. Es ist erkennbar, daß hierbei die Greifer 3-6 in ihrer Ruhelage einen Abstand 21 zum Außenumfang des Packungsgutes 12 aufweisen und die Hakenenden 16 parallel zu den Außenkanten des Packungsgutes gerichtet sind. Über einen später noch zu beschreibenden Bewegungsantrieb werden dann die Hakenenden in Pfeilrichtung 20 senkrecht zur jeweiligen Kante des Packungsgutes gegen das Packungsgut gefahren und klemmen dieses Packungsgut seitlich ein. Danach werden die Hakenenden in gleicher Weise gedreht, wie dies anhand der Figuren 4 und 5 dargestellt ist.

Vorteil dieses kombinierten Bewegungsantriebes (Verfahren und Drehen) ist, daß die Aufnahmeposition des Packungsgutes in bezug zu der Aufnahmeposition der Greifer nicht genau fluchten muß, sondern es wird ein gewisses Spiel zwischen dem Packungsgut und den darüberliegenden Greifern zugelassen, welches Spiel durch den Bewegungsantrieb in den Pfeilrichtungen 20 später ausgeglichen wird.

Die Figur 8 zeigt schematisiert in allgemeiner Form einen Einlegekopf 1 nach der Erfindung in seiner Ausführung, wie er beispielsweise für ein Packungsgut 12 nach Figur 4 verwendet wird. Es ist erkennbar, daß an der Unterseite des Einlegekopfes 1 Greifer 3-6 parallel zueinander und im wesentlichen vertikal gerichtet angeordnet sind.

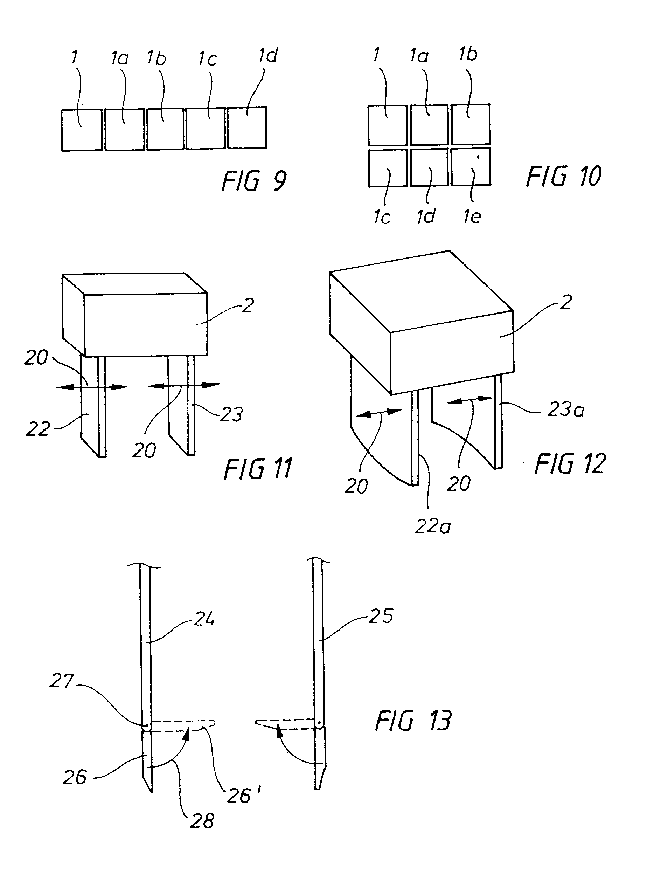

Die Figuren 9 und 10 zeigen, daß derartige Einlegeköpfe 1,1a - 1d (Figur 9) und Einlegeköpfe 1 , 1a - 1e (Figur 10) reihen-, spalten- oder auch matrixförmig angeordnet werden können.

Dank der schmalen Ausbildung der Einlegeköpfe und der dünnen stangenförmigen Greifer ist es deshalb möglich, derartige Einlegeköpfe in dichtem Abstand zeilen- und spaltenförmig anzuordnen.

Die Figuren 11 und 12 zeigen noch weitere Ausbildungsformen von Greifern. Es werden hierbei plattenförmige Greifer 22, 23 vorgeschlagen, wobei im Falle der Figur 11 die plattenförmigen Greifer gerade ausgebildet sind und lediglich zum Einklemmen der Ware geeignet sind, wobei zum Einklemmen die Greifer 22,23 in den Pfeilrichtungen 20 verfahren werden, während in Figur 12 die Greifer 22a, 23a dem Außenumfang des Packungsgutes angepaßt sind und eine etwa bogenförmige Gestalt aufweisen.

Die Figur 13 zeigt eine weitere Ausführungsform von Greifern 24,25, wobei erkennbar ist, daß am unteren freien Ende des vertikalen Teils des jeweiligen Greifers das Hakenende 26 über ein Schwenklager 27 in den Pfeilrichtungen 28 und in Gegenrichtung hierzu schwenkbar angeordnet ist.

Der Schwenkantrieb für das Hakenende 26 kann hierbei im Innenraum des jeweiligen Greifers 24,25 angeordnet sein.

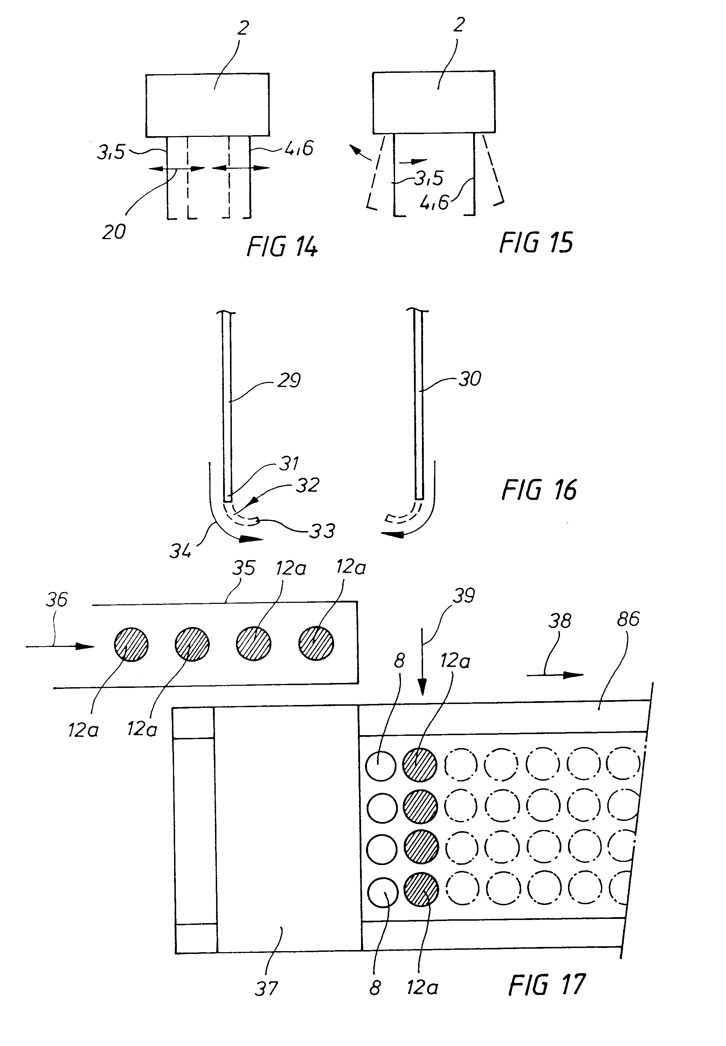

Die Figur 14 zeigt schematisiert einen weiteren Bewegungsantrieb eines Greifers, wie er für ein Packungsgut 12 nach Figur 6 beschrieben wurde. Hierbei ist erkennbar, daß die Greifer 3-6 in den Pfeilrichtungen 20 in einer horizontalen Ebene verfahrbar sind und zusätzlich noch drehbar ausgebildet sind (vergl. Figur 4).

Ebenso ist es gemäß Figur 15 möglich, die Greifer 3-6 schwenkbar im Antriebsteil 2 zu lagern, wobei zusätzlich dann - um aus der Tiefziehpackung wieder den Einlegekopf 1 abheben zu können - die Greifer 3-

4

6 noch zusätzlich drehbar angetrieben sind.

Die Figur 16 zeigt ein weiteres Ausführungsbeispiel für die Ausbildung derartiger Greifer 29,30, wobei erkennbar ist, daß jeder Greifer 29,30 aus einem vertikalen, hülsenförmigen Teil besteht, in dessen Innenraum ein Schubteil 32 verschiebbar geführt ist.

Sobald dieses Schubteil 32 aus der unteren Öffnung 31 in Pfeilrichtung 34 herausgefahren wird, bildet es selbstätig eine Krümmung 33 aus.

Derartige Schubteile 32 bestehen z.B. aus einem "Memory"-Metall, aus einem mit elektrischem Strom beheizbaren Bimetallstreifen oder dergleichen.

Die Figur 17 zeigt in allgemeiner Form die Verwendung von Einlegeköpfen in einer Maschine nach der vorliegenden Erfindung.

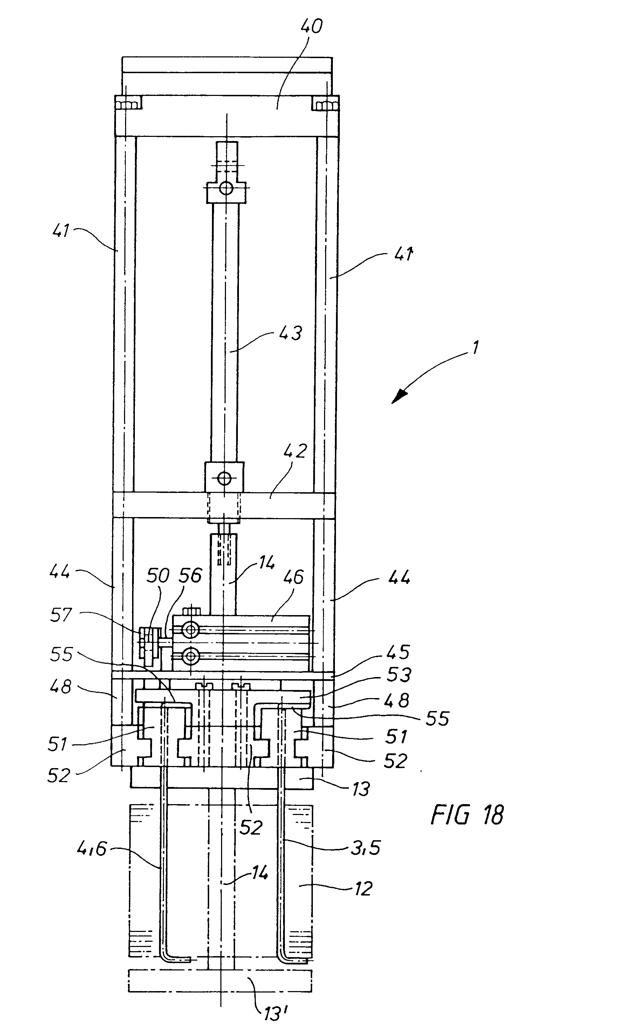

Hierbei wird das Packungsgut 12a stapelförmig in gegenseitigem Abstand auf einem Zuführband 35 angeordnet und gelangt in Pfeilrichtung 36 in den Bereich einer Verpackungsmaschine, die beispielsweise die Formgebung nach den später zu beschreibenden Figuren 18 - 24 aufweist.

Die Verpackungsmaschine ist hierbei über dem Zuführband 35, über einem Formwerkzeug 37 und über dem Abtransportband 86 angeordnet.

Die in der Figur 17 nicht näher dargestellten Einlegeköpfe ergreifen also die auf dem Zuführband 35 angeordneten stapelförmigen Packungsgüter 12a, nehmen sie auf und führen sie über die noch leeren Tiefziehpackungen 8, die von dem Formwerkzeug 37 hergestellt werden und in Pfeilrichtung 38 das Formwerkzeug 37 verlassen.

Die von den Einlegeköpfen (in Figur 17 nicht dargestellt) aufgenommenen Packungsgüter 12a werden nun reihenweise in die Tiefziehpackungen 8 eingelegt, wie dies in Figur 17 dargestellt ist.

Die in den späteren Figuren zu beschreibende Einlegevorrichtung 74 ist hierbei etwa in Position 39 über dem Abtransportband 86 angeordnet.

Die konstruktive Ausführung eines Einlegekopfes 1 nach der vorliegenden Erfindung wird nun anhand der Figuren 18 - 22 näher beschrieben.

In einer oberen Halteplatte 40 sind hierbei vier einen gegenseitigen Abstand voneinander einnehmende und zueinander parallele Distanzsäulen 41 einseitig gefasst. Die Distanzsäulen 41 sind in einer Zwischenplatte 42 gefasst, welche Zwischenplatte einen Pneumatikzylinder 43 aufnimmt, dessen Kolbenstange an der Unterseite mit einer Führungsstange 14 verbunden ist. Die Führungsstange 14 ist an ihrer Unterseite mit einem Stempel 13 verbunden, der in Figur 18 in zwei verschiedenen Funktionsstellungen gezeigt ist.

An die Zwischenplatte 42 schließen sich weitere Distanzsäulen 44 an, die ihrerseits in einer Zwischenplatte 45 gefaßt sind.

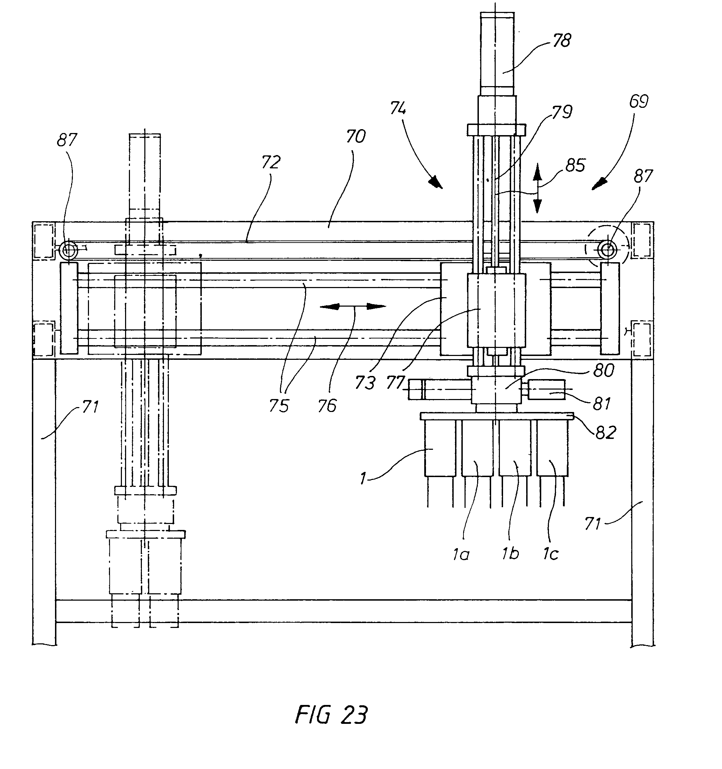

Die Zwischenplatte 45 trägt den Bewegungsantrieb für die Greifer 3-6, wobei der Bewegungsantrieb über zwei unabhängig voneinander ansteuerbare Pneumatikzylinder 46,47 (vergl. Figur 22) vorgenommen wird.

An der Unterseite der Zwischenplatte 45 sind weitere Distanzbolzen 48 angeordnet, die ihrerseits eine Grundplatte 52 halten.

Im Zwischenraum zwischen der Zwischenplatte 45 und der Grundplatte 52 ist der Bewegungsantrieb für die Drehung der Greifer und für das Verfahren der Greifer in horizontaler Ebene angeordnet.

Jeder Greifer ist mit seinem vertikalen Teil drehbar in einem ersten Schlitten 51 gelagert, welcher Schlitten 51 den Verschiebeantrieb des jeweiligen Greifers 3-6 ausführt. Das vertikale Ende des jeweiligen Greifers ist über ein Knie 55 Z-förmig abgebogen und endet in einem weiteren vertikal nach oben ragenden Ende 68.

Dieses Ende 68 ist in einer Bewegungsplatte 49 aufgenommen, welche Bewegungsplatte 49 verschiebbar ist und somit den Drehantrieb des Greifers übernimmt.

Die Verschiebung des ersten Schlittens 51 für den Verschiebeantrieb des Greifers 3 erfolgt über einen zweiten Schlitten 50, welcher Schlitten 50 verschiebbar auf der Grundplatte 52 geführt ist.

Zur Fixierung des Greifers 3 in vertikaler Richtung ist eine Gegenplatte 53 vorgesehen, die im wesentlichen zwischen der Bewegungsplatte 49 und dem Schlitten 51 angeordnet ist. Diese Gegenplatte 53 liegt auf dem Knie 55 des Greifers auf, um diesen in vertikaler Richtung gegen Verschieben zu sichern.

Nachfolgend wird der Verschiebeantrieb des jeweiligen Greifers 3 in horizontaler Ebene näher beschrieben.

Wie eingangs ausgeführt ist der Greifer mit seinem vertikalen Teil in dem ersten Schlitten 51 drehbar gelagert. Dieser erste Schlitten 51 ist in den Pfeilrichtungen 20 verschiebbar auf der Grundplatte 52 geführt.

Der Verschiebeantrieb erfolgt dadurch, daß der zweite Schlitten 50 in einer Nut 63 der Grundplatte 52 verschiebbar geführt ist, und der Verschiebeantrieb dadurch erfolgt, daß der zweite Schlitten 50 über seinen plattenförmigen Grundkörper hinaus nach oben vertikal verlängert ist und einen seitlichen Ansatz 60 ausbildet, in dem ein Schlitz 61 ausgebildet ist. In diesen Schlitz 61 greift die Kolbenstange 56 des

5

Pneumatikzylinders 46 mit einem Mitnehmer 57 ein.

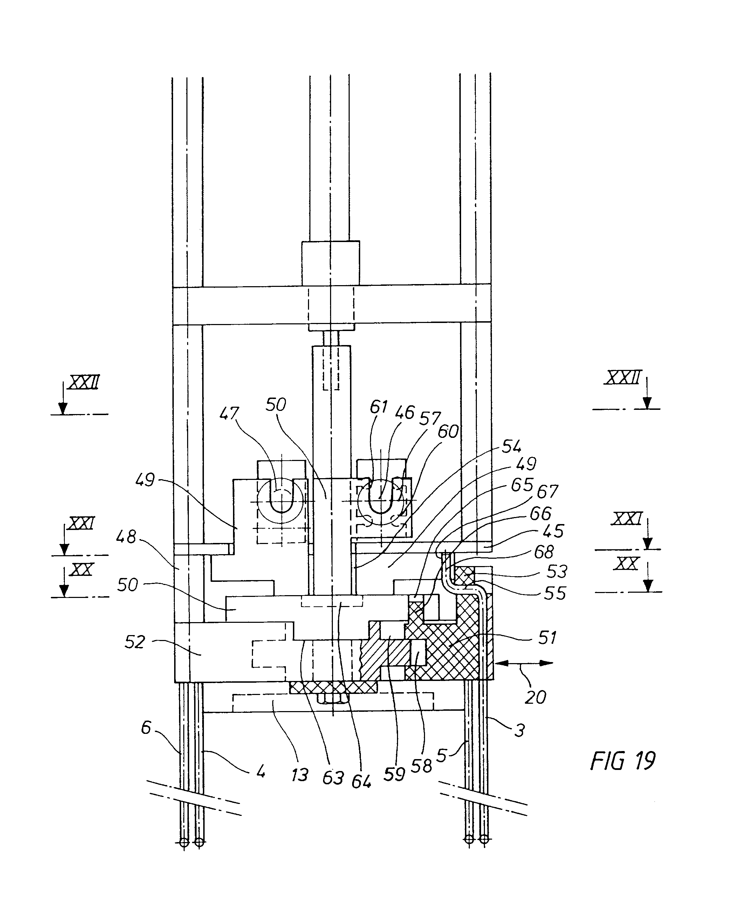

Durch die Betätigung des Pneumatikzylinders 46 wird somit der gesamte Schlitten 50 senkrecht zur Zeichenebene der Figur 19 in der Nut 63 im Bereich der Grundplatte 52 verschoben.

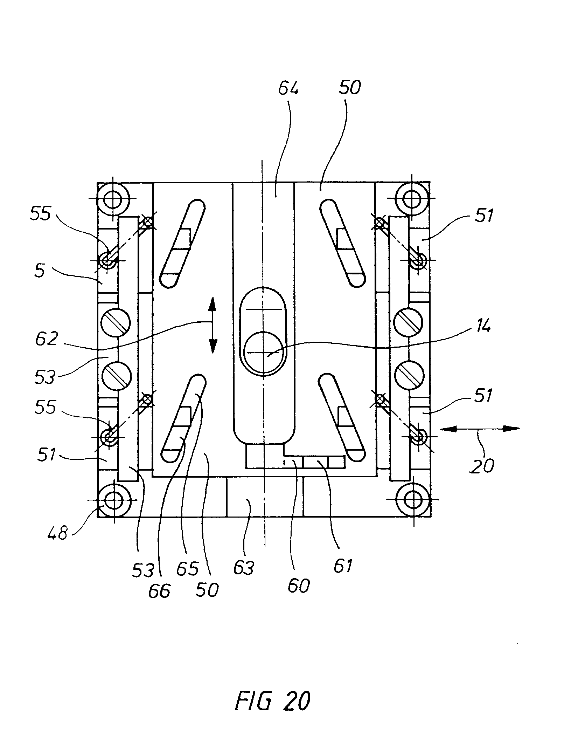

Im Bereich des Schlittens 50 sind gemäß der Figur 20 schräge Schlitze 65 angeordnet, in welche jeweils eine Nase 66 des ersten Schlittens 51 eingreift.

Durch die Verschiebung des Schlittens 50 in den Pfeilrichtungen 62 wird somit der Schlitten 51 in den Pfeilrichtungen 20 (senkrecht zur Pfeilrichtung 62) verschoben.

Der erste Schlitten 51 ist hierbei im Bereich einer Ausnehmung 58 in der Grundplatte 52 verschiebbar geführt, wobei eine Ausnehmung 59 zwischen dem Schlitten 51 und der Grundplatte 52 für den genügenden Bewegungsspielraum des Schlittens 51 sorgt.

Nachfolgend wird nun der Drehantrieb des Greifers 3 näher beschrieben.

Der Drehantrieb besteht im wesentlichen aus einem Pneumatikzylinder 47, der mit seiner Kolbenstange 56 über den Mitnehmer 57 auf eine Bewegungsplatte 49 wirkt. Diese Bewegungsplatte ist in einer Freistellung der Zwischenplatte 45 verfahrbar senkrecht zur Zeichenebene der Figur 19 verschiebbar.

Hierbei wird die Bewegungsplatte 49 in einer Nut 64 des zweiten Schlittens 50 verschiebbar geführt.

Um die Verschiebung zwischen der Bewegungsplatte 49 und dem zweiten Schlitten 50 zu erlauben, ist in der Bewegungsplatte 49 eine Ausnehmung 54 angeordnet.

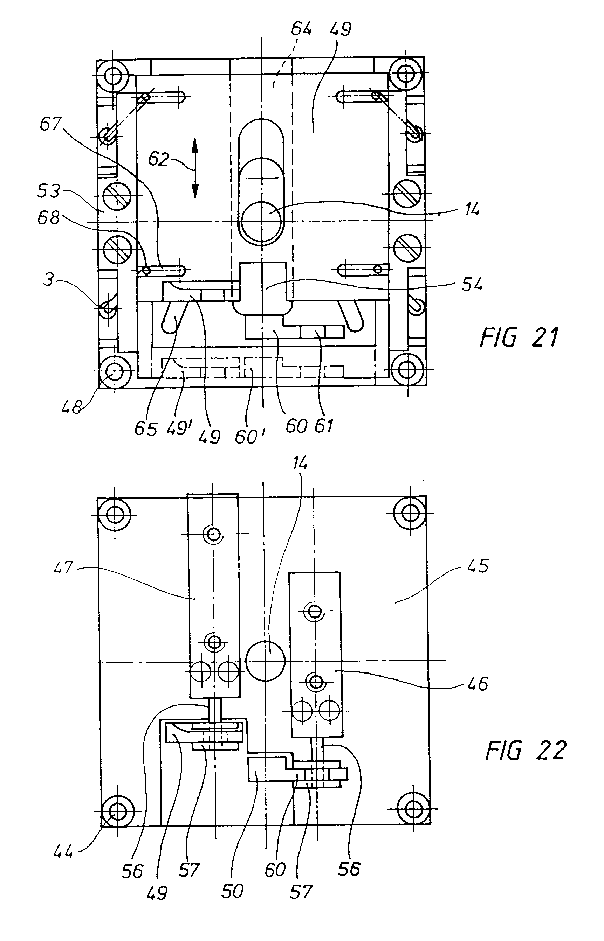

Die genauere Führung dieser Bewegungsplatte 49 ist aus Figur 21 zu entnehmen.

Hierbei ist erkennbar, daß diese Bewegungsplatte 49 ebenfalls in den Pfeilrichtungen 62 verschoben wird, wobei wichtig ist, daß die Enden 68 der Greifer in dem jeweiligen Schlitz 67 geführt sind und exzentrisch zum vertikalen Teil des Greifers 3 angeordnet sind, so daß mit der Verschiebung der Bewegungsplatte 49 in den Pfeilrichtungen 62 der Greifer 3 gedreht wird.

Die Verschiebestellung der Bewegungsplatte 49 ist in ihrer unteren Lage mit 49' in Figur 21 angegeben.

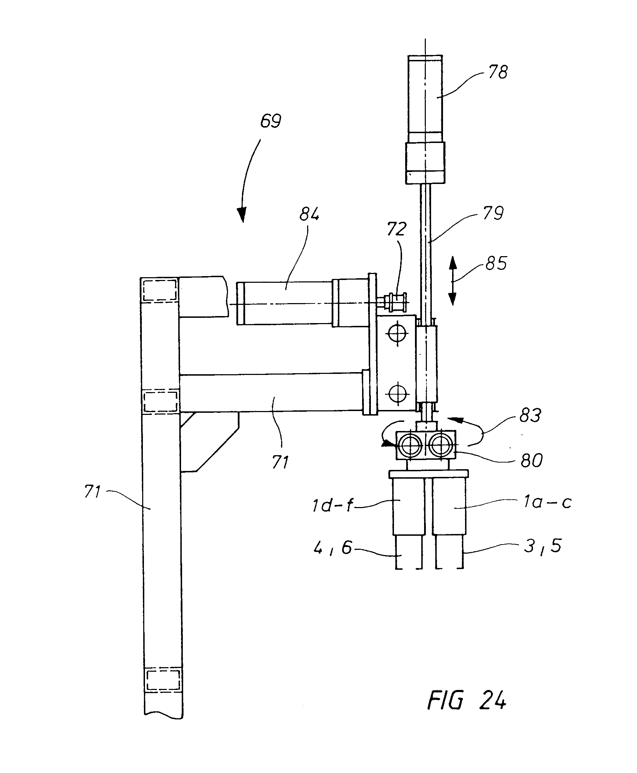

Aus den Figuren 23 und 24 läßt sich nun die Mehrfachanordnung derartiger Einlegeköpfe beschreiben, wie sie anhand der Figuren 18 - 22 beschrieben wurden.

Eine mit den erfindungsgemäßen Einlegeköpfen ausgerüstete Einlegevorrichtung 74 besteht im wesentlichen aus einem Portal 69, welches seinerseits aus einer horizontalen Traverse 70 und aus einem darunter befestigten Gestell 71 besteht.

In der Traverse 70 ist ein Zahnriemenantrieb, bestehend aus dem umlaufenden Zahnriemen 72, vorgesehen, welcher über Umlenkrollen 87 drehend angetrieben ist.

Der Zahnriemen ist hierbei mit einem Schlitten 73 verbunden, der in horizontal angeordneten Führungsschienen 75 in der Traverse 70 in den Pfeilrichtungen 76 verfahrbar ist.

Oberhalb der Führung 77 ist eine Hubvorrichtung 78 angeordnet, die über eine Hubstange 79 mit einer Halteplatte 82 verbunden ist.

An der Unterseite der Halteplatte 82 sind eine Vielzahl von Einlegeköpfen 1,1a, 1f angeordnet.

Unterhalb der Führung 77 ist ein Drehlager 80 angeordnet, welches mit einem Drehantrieb 81 ausgerüstet ist, so daß die Halteplatte 82 nicht nur heb- und senkbar, sondern auch verdrehbar in den Pfeilrichtungen 83 ist.

Auf diese Weise ist es möglich, die an der Unterseite der Halteplatte 83 angeordneten Einlegeköpfe 1, 1a - 1f anzuheben, abzusenken und zu verdrehen.

Zusätzlich kann vorgesehen sein (dies ist zeichnerisch nicht dargestellt), daß der gegenseitige Abstand der Einlegeköpfe 1, 1a - 1f an der Halteplatte 82 zueinander verstellbar ist.

Die Verstellung kann motorisch, pneumatisch oder hydraulisch erfolgen.

Aus Figur 24 ist noch erkennbar, daß der Verschiebeantrieb in den Pfeilrichtungen 76 mit dem Zahnriemen 72 über einen Motor 84 erfolgt, und daß der Hubantrieb der Hubvorrichtung 78 in den Pfeilrichtungen 85 vollzogen wird.

Eine derartige Einlegevorrichtung 74 wird also für eine Verpackungsmaschine verwendet, wie sie in Figur 17 dargestellt ist.

Im übrigen ist es noch zusätzlich vorgesehen, daß das gesamte - in den Figuren 23 und 24 gezeigte - Portal 69 verfahrbar ist, um unterschiedliche Verpackungspositionen zu erreichen.

Eine Verfahrung des Portals 69 wäre beispielsweise in der Situation nach Figur 17 notwendig, wo erkennbar ist, daß das Zuführband 35 außermittig zu dem Abtransportband 86 angeordnet ist.

In anderen Ausführungsformen ist es vorgesehen, daß das Zuführband 35 genau mittig und fluchtend zu dem Abtransport 86 angeordnet ist.

ZEICHNUNGS-LEGENDE

| | | | |
|---|---|---|---|
| 1, 1a-1e | Einlegekopf | 31 | Öffnung |
| 2 | Antriebsteil | 32 | Schubteil |
| 3,3a | Greifer | 33 | Krümmung |
| 4 | " | 34 | Pfeilrichtung |
| 5 | " | 35 | Zuführband |
| 6 | " | 36 | Pfeilrichtung |
| 7 | Pfeilrichtung | 37 | Formwerkzeug |
| 8 | Tiefziehpackung | 38 | Pfeilrichtung |
| 9 | Zwischenraum | 39 | Position |
| 10 | Boden | 40 | Halteplatte |
| 11 | Seitenwand | 41 | Distanzsäulen |
| 12,12a | Packungsgut | 42 | Zwischenplatte |
| 13,13' | Stempel | 43 | Pneumatikzylinder |
| 14 | Führungsstange | 44 | Distanzsäule |
| 15 | Pfeilrichtung | 45 | Zwischenplatte |
| 16,16' | Hakenende | 46 | Pneumatikzylinder |
| 17 | Hakenende | 47 | " |
| 18 | Pfeilrichtung | 48 | Distanzboden |
| 19 | " | 49,49' | Bewegungsplatte |
| 20 | " | 50 | Schlitten (zweiter) |
| 21 | Abstand | 51 | Schlitten (erster) |
| 22,22a | Greifer | 52 | Grundplatte |
| 23,23a | Greifer | 53 | Gegenplatte |
| 24 | Greifer | 54 | Ausnehmung |
| 25 | " | 55 | Knie (Greifer) |
| 26 | Hakenende | 56 | Kolbenstange |
| 27 | Schwenklager | 57 | Mitnehmer |
| 28 | Pfeilrichtung | 58 | Ausnehmung |
| 29 | Greifer | 59 | " |
| 30 | " | 60 | Ansatz |

```
61 Schlitz
62 Pfeilrichtung
63 Nut
64 Nut
65 Schlitz
66 Nase
67 Schlitz
68 Ende
69 Portal
70 Traverse
71 Gestell
72 Zahnriemen
73 Schlitten
74 Einlegevorrichtung
75 Führungsschiene
76 Pfeilrichtung
77 Führung
78 Hubvorrichtung
79 Hubstange
80 Drehlager
81 Drehantrieb
82 Halteplatte
83 Pfeilrichtung
84 Motor
85 Pfeilrichtung
86 Abtransportband
87 Umlenkrolle
```

**Patentansprüche**

1. Vorrichtung zum Einlegen von stapelförmigem Packungsgut, insbesondere von Käsescheiben, Wurstscheiben, Keksen und dergleichen Waren, in Tiefziehbehälter oder Becher, **gekennzeichnet durch** einen heb- und senkbaren Einlegekopf (1), an dessen Unterseite schmale stangen- oder plattenförmige Greifer (3,4,5,6) vorgesehen sind, die das Packungsgut (12) aufnehmend sich nach unten erstrecken und deren unteren, freie Enden abgewinkelt als Haken (16,17) ausbilden, wobei mittels eines im Einlegekopf (1) angeordneten Bewegungsantriebs für die Greifer (3,4,5,6) diese Hakenenden (16,17)-unter das Packungsgut (12) greifend oder dieses freigebend drehbar oder schwenkbar sind.

2. Vorrichtung nach Anspruch 1, **dadurch gekennzeichnet**, daß die Greifer (3,4,5,6) in dem Zwischenraum (9) zwischen dem Außenumfang des Packungsgutes (12) und Innenumfang der jeweiligen Tiefziehpackung nach unten führend relativ schmal ausgeführt sind und diesen Zwischenraum (9) ausfüllen.

**3.** Vorrichtung nach Anspruch 1 oder 2, **dadurch gekennzeichnet**, daß die Hakenenden (16,17) der drehbaren stangenförmigen Greifer (3,4,5,6) um 90° abgebogen sind und in eine horizontale Ebene weisen.

**4.** Vorrichtung nach Anspruch 3, **dadurch gekennzeichnet**, daß die in die horizontale Ebene abgebogenen Hakenenden (16) in dieser Ebene zusätzlich eine Krümmung (17 aufweisen.

**5.** Vorrichtung nach einem der Ansprüche 1 bis 4, **dadurch gekennzeichnet**, daß die Greifer (3,4,5,6) für die die Schwenkbewegung der Hakenenden (16,17) unter das Packungsgut (12) und außer Eingriff mit diesem drehangetrieben sind.

**6.** Vorrichtung nach einem der Ansprüche 1 bis 4, **dadurch gekennzeichnet**, daß die Greifer (3,4,5,6) in einer horizontalen Ebene verschiebbar ausgebildet sind.

**7.** Vorrichtung nach einem der Ansprüche 1 bis 4, **dadurch gekennzeichnet**, daß die Greifer (3,4,5,6) am Einlegekopf (1) schwenkbar gehaltert sind.

**8.** Vorrichtung nach einem der Ansprüche 1 bis 4, **dadurch gekennzeichnet**, daß die Greifer (3,4,5,6) als vertikal ausgerichtete Hohlrohre ausgebildet sind, wobei im jeweiligen Hohlrohr ein Innenteil verschiebbar angeordnet ist, welches ein hakenförmiges Ende ausbildet.

**9.** Vorrichtung nach einem der Ansprüche 1 bis 8, **dadurch gekennzeichnet**, daß die hakenförmigen Enden (26) der stangenförmigen Greifer (3,4,5,6) schwenkbar an einem Schwenklager (27) am unteren freien Ende des stangenförmigen Greifers (24,25) ausgebildet sind.

**10.** Vorrichtung nach einem der Ansprüche 1 bis 8, **dadurch gekennzeichnet**, daß bei einer plattenförmiger Ausbildung der Greifer (22,23) diese in einer horizontalen Ebene verschiebbar sind.

**11.** Vorrichtung nach einem der Ansprüche 1 bis 10, **dadurch gekennzeichnet**, daß mehrere der Einlegeköpfe (1) vorgesehen sind, die reihenweise oder spaltenweise oder in Form einer Matrix angeordnet sind.

**12.** Vorrichtung nach Anspruch 11, **dadurch gekennzeichnet**, daß die Einlegeköpfe (1) an einer Halteplatte (40) gelagert sind, die mit einem Bewegungsantrieb verbunden ist, derart, daß die Halteplatte mitsamt den an daran befestigten Einlegeköpfen (19) gedreht werden kann, abgehoben und/oder abgesenkt werden kann.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

FIG 17

FIG 18

FIG 19

FIG 20

FIG 21

FIG 22

FIG 23

*69*

*78*

*84*

*72*

*79*

*85*

*71*

*71*

*83*

*80*

*1d-f*

*1a-c*

*4,6*

*3,5*

*FIG 24*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 227 635 (LEIBETSEDER)<br>* Spalte 5, Zeile 5 - Zeile 35 * * * Spalte 7, Zeile 26 - Zeile 33; Abbildungen * * | 1,2,3,5,7 | B 65 B 5/10<br>B 65 B 5/06 |
| Y | – – – | 9 | |
| X | US-A-3 864 893 (YOSHIO MURAO)<br>* Spalte 2, Zeile 2 - Spalte 3, Zeile 10; Abbildungen * *<br>– – – | 1,7 | |
| Y | EP-A-0 002 875 (K. CRISPLANT)<br>* Seite 4, Zeile 12 - Seite 6, Zeile 13; Abbildungen * *<br>– – – | 9 | |
| A | US-A-4 192 121 (O. CAUDLE)<br>* Spalte 6, Zeile 24 - Spalte 8, Zeile 60; Abbildungen * *<br>– – – | 1 | |
| A | US-A-3 024 585 (B. SCHUBERT)<br>– – – – – | | |

| RECHERCHIERTE SACHGEBIETE (Int. Cl.5) |
|---|
| B 65 B<br>B 65 G |

**Der vorliegende Recherchenbericht wurde für alle Patentansprüche erstellt**

| Recherchenort | Abschlußdatum der Recherche | Prüfer |
|---|---|---|
| Den Haag | 23 Dezember 91 | JAGUSIAK A.H.G. |